# EUROPEAN PATENT APPLICATION

(11) **EP 2 854 394 A1**
(43) Date of publication of application: **01.04.2015**
(21) Application number: 13857466.0
(22) Date of filing: 21.11.2013
(51) Int. Cl.: H04N 7/14

(54) **VIDEO DATA TRANSMISSION METHOD, APPARATUS AND COMMUNICATION DEVICE**

(30) Priority: 21.11.2012 CN 201210475722
(71) Applicant: Huawei Device Co., Ltd., Longgang District Shenzhen Guangdong 518129 (CN)
(72) Inventor: LI, Kexin, Shenzhen Guangdong 518129 (CN); WANG, Lin, Shenzhen Guangdong 518129 (CN)
(74) Representative: Haley, Stephen
(86) International application number: PCT/CN2013/087555
(87) International publication number: WO 2014/079371

(57) **Abstract**

Embodiments of the present invention provide a video data transmission method and apparatus, and a communications device, and belong to the terminal field. The method includes: receiving, by a second communications device, a video call request sent by a first communications device; determining whether media capability information of the first communications device matches media capability information of the second communications device; and constructing a Session Description Protocol SDP answer message when the media capability information of the second communications device does not match the media capability information of the first communications device, and the media capability information of the second communications device and the media capability information of the first communications device include a same audio calling frequency; and sending the SDP answer massage to the first communications device, so that the first communications device and the second communications device transmit video data. In the present invention, an SDP answer message is constructed, so that video data can be transmitted between a first communications device and a second communications device.

## Description

This application claims priority to Chinese Patent Application No. 201210475722.3, filed with the Chinese Patent Office on November 21, 2012 and entitled "VIDEO DATA TRANSMISSION METHOD AND APPARATUS, AND COMMUNICATIONS DEVICE", which is incorporated herein by reference in its entirety.

### TECHNICAL FIELD

The present invention relates to the terminal field, and in particular, to a video data transmission method and apparatus, and a communications device.

### BACKGROUND

With development of terminal data services, there are increasing packet switched domain data services. Video calling is one of typical packet switched domain data services, and how to ensure normal transmission of video data has become a focus of attention in the industry.

In the prior art, when A calls B, A sends a video call request to B, where the video call request carries media capability information of A, and the media capability information includes an audio calling frequency and a video calling frequency of A. When receiving the video call request sent by A, B matches the media capability information of A according to media capability information of B. When the media capability information of B and the media capability information of A include a same audio calling frequency, and the media capability information of B and the media capability information of A include a same video calling frequency, B sends a Session Description Protocol SDP (Session Description Protocol) answer message to A, a video transmission channel is established between A and B, and video data is transmitted between A and B.

In a process of implementing the present invention, the inventor finds that in the prior art exists at least the following problem:

When a video transmission channel is being established, if the media capability information of B and the media capability information of A include a same audio calling frequency, and the media capability information of B and the media capability information of A do not include a same video calling frequency, or the media capability information of B does not include a video calling frequency, or the media capability information of A does not include a video calling frequency, or neither the media capability information of A nor the media capability information of B includes a video calling frequency, the video transmission channel cannot be established for video data transmission between A and B.

### SUMMARY

To solve a problem in the prior art, embodiments of the present invention provide a video data transmission method and apparatus, and a communications device. The technical solutions are as follows:

According to one aspect, a video data transmission method is provided, where the method includes:
receiving, by a second communications device, a video call request sent by a first communications device, where the video call request carries media capability information of the first communications device;
determining whether media capability information of the second communications device matches the media capability information of the first communications device;
constructing a Session Description Protocol SDP answer message when the media capability information of the second communications device does not match the media capability information of the first communications device, and the media capability information of the second communications device and the media capability information of the first communications device include a same audio calling frequency, where content of a video support field of the SDP answer message is empty, and an audio support field of the SDP answer message is the same audio calling frequency; and
sending the SDP answer message to the first communications device, so that the first communications device and the second communications device transmit video data.

Optionally, the constructing a Session Description Protocol SDP answer message when the media capability information of the second communications device does not match the media capability information of the first communications device, and the media capability information of the second communications device and the media capability information of the first communications device include a same audio calling frequency, where content of a video support field of the SDP answer message is empty, and an audio support field of the SDP answer message is the same audio calling frequency, specifically includes:
constructing the SDP answer message when the media capability information of the second communications device and the media capability information of the first communications device include a same audio calling frequency, and the media capability information of the second communications device and the media capability information of the first communications device do not include a same video calling frequency, where the audio support field of the SDP answer message is the same audio calling frequency, the video support field is reserved, and the content of the video support field is empty; and
constructing the SDP answer message when the media capability information of the second communications device and the media capability information of the first communications device include a same audio calling frequency, and neither the media capability information of the second communications device nor the media capability information of the first communications device includes a video calling frequency, where the audio support field of the SDP answer message is the same audio calling frequency, the video support field is reserved, and the content of the video support field is empty.

Optionally, the determining whether media capability information of the second communications device matches the media capability information of the first communications device, includes:
determining whether the media capability information of the first communications device includes a video calling frequency, where
if the media capability information of the first communications device does not include a video calling frequency, the media capability information of the second communications device does not match the media capability information of the first communications device; and
determining, if the media capability information of the first communications device includes a video calling frequency, whether the media capability information of the second communications device includes a video calling frequency, where if the media capability information of the second communications device does not include a video calling frequency, the media capability information of the second communications device does not match the media capability information of the first communications device.

Optionally, after the determining, if the media capability information of the first communications device includes a video calling frequency, whether the media capability information of the second communications device includes a video calling frequency, the method further includes:
if the media capability information of the second communications device includes a video calling frequency, determining whether the media capability information of the second communications device and the media capability information of the first communications device include a same audio calling frequency, and whether the media capability information of the second communications device and the media capability information of the first communications device include a same video calling frequency; where
if the media capability information of the second communications device and the media capability information of the first communications device include a same audio calling frequency, and the media capability information of the second communications device and the media capability information of the first communications device include a same video calling frequency, the media capability information of the second communications device matches the media capability information of the first communications device; and
if the media capability information of the second communications device and the media capability information of the first communications device include a same audio calling frequency, and the media capability information of the second communications device and the media capability information of the first communications device do not include a same video calling frequency, the media capability information of the second communications device does not match the media capability information of the first communications device.

According to another aspect, a video data transmission apparatus is provided, where the apparatus includes:
a receiving module, configured to receive a video call request sent by a first communications device, where the video call request carries media capability information of the first communications device;
a judging module, configured to determine whether media capability information of the local communications device matches the media capability information of the first communications device;
a constructing module, configured to construct a Session Description Protocol SDP answer message when the media capability information of the local communications device does not match the media capability information of the first communications device, and the media capability information of the local communications device and the media capability information of the first communications device include a same audio calling frequency, where content of a video support field of the SDP answer message is empty, and an audio support field of the SDP answer message is the same audio calling frequency; and
a sending module, configured to send the SDP answer message to the first communications device, so that the first communications device and the local communications device transmit video data.

Optionally, the constructing module is specifically configured to construct the SDP answer message when the media capability information of the local communications device and the media capability information of the first communications device include a same audio calling frequency, and the media capability information of the local communications device and the media capability information of the first communications device do not include a same video calling frequency, where the audio support field of the SDP answer message is the same audio calling frequency, the video support field is reserved, and the content of the video support field is empty; and
the constructing module is further specifically configured to construct the SDP answer message when the media capability information of the local communications device and the media capability information of the first communications device include a same audio calling frequency, and neither the media capability information of the local communications device nor the media capability information of the first communications device includes a video calling frequency, where the audio support field of the SDP answer message is the same audio calling frequency, the video support field is reserved, and the content of the video support field is empty.

Optionally, the judging module includes:
a judging unit, configured to determine whether the media capability information of the first communications device includes a video calling frequency; and
a matching and determining unit, configured to, if the media capability information of the first communications device does not include a video calling frequency, determine that the media capability information of the local communications device does not match the media capability information of the first communications device; where
the matching and determining unit is further configured to determine, if the media capability information of the first communications device includes a video calling frequency, whether the media capability information of the local communications device includes a video calling frequency, where if the media capability information of the local communications device does not include a video calling frequency, the media capability information of the local communications device does not match the media capability information of the first communications device.

Optionally, the judging unit is further configured to determine, if the media capability information of the local communications device includes a video calling frequency, whether the media capability information of the local communications device and the media capability information of the first communications device include a same audio calling frequency, and whether the media capability information of the local communications device and the media capability information of the first communications device include a same video calling frequency;
the matching and determining unit is further configured to, if the media capability information of the local communications device and the media capability information of the first communications device include a same audio calling frequency, and the media capability information of the local communications device and the media capability information of the first communications device do not include a same video calling frequency, determine that the media capability information of the local communications device matches the media capability information of the first communications device; and
the matching and determining unit is further configured to, if the media capability information of the local communications device and the media capability information of the first communications device include a same audio calling frequency, and the media capability information of the local communications device and the media capability information of the first communications device do not include a same video calling frequency, determine that the media capability information of the local communications device does not match the media capability information of the first communications device.

According to another aspect, a communications device is provided, where the communications device includes:
a receiver, a sender, and a processor, where the receiver is coupled with the processor, and the processor is coupled with the sender;
the receiver is configured to receive a video call request sent by a first communications device, where the video call request carries media capability information of the first communications device;
the processor is configured to determine whether media capability information of a local communications device matches the media capability information of the first communications device, where
the processor is further configured to construct a Session Description Protocol SDP answer message when the media capability information of the local communications device does not match the media capability information of the first communications device, and the media capability information of the local communications device and the media capability information of the first communications device include a same audio calling frequency, where content of a video support field of the SDP answer message is empty, and an audio support field of the SDP answer message is the same audio calling frequency; and
the sender is configured to send the SDP answer message to the first communications device, so that the first communications device and the local communications device transmit video data.

Optionally, the processor is further specifically configured to construct the SDP answer message when the media capability information of the local communications device and the media capability information of the first communications device include a same audio calling frequency, and the media capability information of the local communications device and the media capability information of the first communications device do not include a same video calling frequency, where the audio support field of the SDP answer message is the same audio calling frequency, the video support field is reserved, and the content of the video support field is empty; and
the processor is further specifically configured to construct the SDP answer message when the media capability information of the local communications device and the media capability information of the first communications device include a same audio calling frequency, and neither the media capability information of the local communications device nor the media capability information of the first communications device includes a video calling frequency, where the audio support field of the SDP answer message is the same audio calling frequency, the video support field is reserved, and the content of the video support field is empty.

Optionally, the processor is further configured to: determine whether the media capability information of the first communications device includes a video calling frequency, where if the media capability information of the first communications device does not include a video calling frequency, the media capability information of the local communications device does not match the media capability information of the first communications device; and determine, if the media capability information of the first communications device includes a video calling frequency, whether the media capability information of the local communications device includes a video calling frequency, where if the media capability information of the local communications device does not include a video calling frequency, the media capability information of the local communications device does not match the media capability information of the first communications device.

Optionally, the processor is further configured to determine, if the media capability information of the local communications device includes a video calling frequency, whether the media capability information of the local communications device and the media capability information of the first communications device include a same audio calling frequency, and whether the media capability information of the local communications device and the media capability information of the first communications device include a same video calling frequency, where if the media capability information of the local communications device and the media capability information of the first communications device include a same audio calling frequency, and the media capability information of the local communications device and the media capability information of the first communications device do not include a same video calling frequency, the media capability information of the local communications device matches the media capability information of the first communications device; and if the media capability information of the local communications device and the media capability information of the first communications device include a same audio calling frequency, and the media capability information of the local communications device and the media capability information of the first communications device do not include a same video calling frequency, the media capability information of the local communications device does not match the media capability information of the first communications device.

In the video data transmission method provided in the embodiments of the present invention, a second communications device receives a video call request sent by a first communications device, where the video call request carries media capability information of the first communications device; determines whether the media capability information of the first communications device matches media capability information of the second communications device; constructs a Session Description Protocol SDP answer message when the media capability information of the second communications device does not match the media capability information of the first communications device, and the media capability information of the second communications device and the media capability information of the first communications device include a same audio calling frequency, where content of a video support field of the SDP answer message is empty, and an audio support field of the SDP answer message is the same audio calling frequency; and sends the SDP answer massage to the first communications device, so that the first communications device and the second communications device transmit video data. By using the technical solutions provided in the present invention, when the media capability information of the first communications device does not match the media capability information of the second communications device, a video transmission channel can still be established between the first communications device and the second communications device for video data transmission, and in addition, the first communications device and the second communications device can use other functions in video calling. Compared with the prior art, a problem that a call fails to be established when the media capability information of the first communications device does not match the media capability information of the second communications device is avoided.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a video data transmission method according to an embodiment of the present invention;
FIG. 2A and FIG. 2B are a signaling interworking diagram of video data transmission according to an embodiment of the present invention;
FIG. 3A and FIG. 3B are a signaling interworking diagram of video data transmission according to an embodiment of the present invention;
FIG. 4A and FIG. 4B are a signaling interworking diagram of video data transmission according to an embodiment of the present invention;
FIG. 5A and FIG. 5B are a signaling interworking diagram of video data transmission according to an embodiment of the present invention;
FIG. 6 is a schematic structural diagram of a video data transmission apparatus according to an embodiment of the present invention; and
FIG. 7 is a schematic structural diagram of a communications device according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

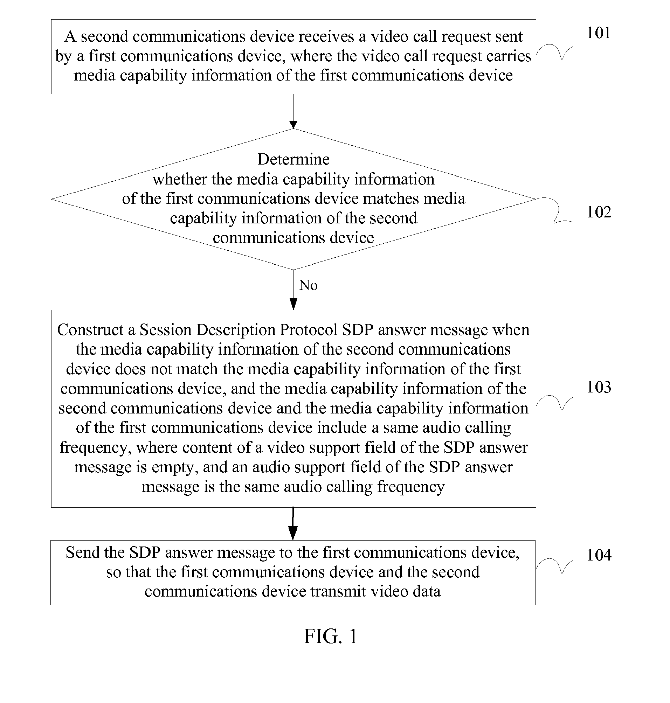

FIG. 1 is a flowchart of a video data transmission method according to an embodiment of the present invention. Referring to FIG. 1, this embodiment specifically includes:
101: A second communications device receives a video call request sent by a first communications device, where the video call request carries media capability information of the first communications device.

Both the first communications device and the second communications device may be a communications device with a communications capability.

The media capability information of the first communications device includes at least an audio calling frequency. Further, the media capability information of the first communications device may further include an audio calling frequency and a video calling frequency.

When the first communications device has a camera and the camera is in a normal working state, that is, the first communications device has a video communications capability, the media capability information of the first communications device carried in the video call request includes an audio calling frequency and a video calling frequency when the first communications device sends the video call request.

However, when the first communications device has no camera or a camera of the first communications device is abnormal, that is, the first communications device has no video communications capability, the media capability information of the first communications device carried in the video call request includes only an audio calling frequency when the first communications device sends the video call request.

102: Determine whether the media capability information of the first communications device matches media capability information of the second communications device, and if the media capability information of the first communications device does not match the media capability information of the second communications device, perform step 103.

It should be noted that in the prior art, video data can be transmitted between the first communications device and the second communications device only when both the first communications device and the second communications device have a video communications capability, and the media capability information of the second communications device and the media capability information of the first communications device include a same audio calling frequency, and the media capability information of the second communications device and the media capability information of the first communications device include a same video calling frequency. Therefore, it is required to determine whether the media capability information of the first communications device matches the media capability information of the second communications device.

In addition, in a case in which a result of determining in step 102 is yes, a Session Description Protocol SDP answer message is constructed, where an audio support field of the SDP answer message is the same audio calling frequency, and a video support field is the same video calling frequency.

103: Construct a Session Description Protocol SDP answer message when the media capability information of the second communications device does not match the media capability information of the first communications device, and the media capability information of the second communications device and the media capability information of the first communications device include a same audio calling frequency, where content of a video support field of the SDP answer message is empty, and an audio support field of the SDP answer message is the same audio calling frequency.

A difference from the prior art lies in that, in this embodiment of the present invention, because it is determined that the media capability information of the second communications device does not match the media capability information of the first communications device, construction of the SDP answer message is adjusted in order to avoid a failure in establishing a video call. In this way, the SDP answer message can be constructed when the media capability information of the second communications device does not match the media capability information of the first communications device but the media capability information of the second communications device and the media capability information of the first communications device include a same audio calling frequency. When the SDP answer message is being constructed, the video support field of the SDP answer message is reserved, and the content of the video support field is set to be empty, so that in a case in which the media capability information of the second communications device does not match the media capability information of the first communications device, video data can still be transmitted between the first communications device and the second communications device.

In the prior art, in an offer/answer model, firstly, one party (an offerer) of a session generates an SDP message to describe a session expected by this party, which constitutes an offer (offer). The offer is delivered to the other party. After receiving the offer, this party may accept and may also reject this offer. When the offer is accepted, an answerer generates, according to the received offer and a capability of the answerer, an SDP message to describe a session that can be accepted by the answerer, where the SDP message is an SDP answer message. When the media capability information of the second communications device and the media capability information of the first communications device include a same audio calling frequency, and the media capability information of the second communications device and the media capability information of the first communications device include a same video calling frequency, the second communications device sends the SDP answer message to the first communications device. The audio support field of the SDP answer message is the same audio calling frequency, and the video support field is the same video calling frequency.

104: Send the SDP answer message to the first communications device, so that the first communications device and the second communications device transmit video data.

Specifically, the second communications device sends the constructed SDP answer message to the first communications device; a network server allocates an audio transmission channel and a video transmission channel to the first communications device and the second communications device; and the first communications device and the second communications device transmit audio data through the allocated audio transmission channel and transmit video data through the allocated video transmission channel. A person skilled in the art may learn that a process of allocating, by the network server, the audio transmission channel and the video transmission channel to the first communications device and the second communications device is disclosed in the prior art, and details are not described herein again.

Further, through the established video transmission channel, the first communications device and the second communications device can use other functions, such as file transfer, in a video calling process.

A person skilled in the art may learn that a specific process of transmitting audio data and video data by the first communications device and the second communications device is the prior art, and details are not described herein again.

Optionally, on a basis of a technical solution of the embodiment shown in FIG. 1, step 103 "Construct a Session Description Protocol SDP answer message when the media capability information of the second communications device does not match the media capability information of the first communications device, where content of a video support field of the SDP answer message is empty" specifically includes step A1 and step A2.

A1: Construct the SDP answer message when the media capability information of the second communications device and the media capability information of the first communications device include a same audio calling frequency, and the media capability information of the second communications device and the media capability information of the first communications device do not include a same video calling frequency, where the audio support field of the SDP answer message is the same audio calling frequency, the video support field is reserved, and the content of the video support field is empty.

In step A1, that the media capability information of the second communications device does not match the media capability information of the first communications device includes the following cases: (1) the media capability information of the second communications device and the media capability information of the first communications device include a same audio calling frequency, and the media capability information of the second communications device and the media capability information of the first communications device do not include a same video calling frequency; (2) the media capability information of the second communications device and the media capability information of the first communications device include a same audio calling frequency, and the media capability information of the second communications device does not include a video calling frequency but the media capability information of the first communications device includes a video calling frequency; and (3) the media capability information of the second communications device and the media capability information of the first communications device include a same audio calling frequency, and the media capability information of the second communications device includes a video calling frequency but the media capability information of the first communications device does not include a video calling frequency.

For the foregoing cases (1), (2), and (3), the SDP answer message is constructed as long as the media capability information of the second communications device and the media capability information of the first communications device include a same audio calling frequency. In a process of constructing the SDP answer message, the same audio calling frequency is saved as the audio support field of the SDP answer message, the video support field of the SDP answer message is reserved, and the content of the video support field is set to be empty, so as to obtain the SDP answer message of which the audio support field is the same audio calling frequency, the video support field is reserved, and the content of the video support field is empty.

A2: Construct the SDP answer message when the media capability information of the second communications device and the media capability information of the first communications device include a same audio calling frequency, and neither the media capability information of the second communications device nor the media capability information of the first communications device includes a video calling frequency, where the audio support field of the SDP answer message is the same audio calling frequency, the video support field is reserved, and the content of the video support field is empty.

For the foregoing case of step A2, the SDP answer message is constructed as long as the media capability information of the second communications device and the media capability information of the first communications device include a same audio calling frequency. In a process of constructing the SDP answer message, the same audio calling frequency is saved as the audio support field of the SDP answer message, the video support field of the SDP answer message is reserved, and the video support field is set to be empty, so as to obtain the SDP answer message of which the audio support field is the same audio calling frequency, the video support field is reserved, and the content of the video support field is empty.

In addition, when the media capability information of the second communications device and the media capability information of the first communications device do not include a same audio calling frequency, a call fails to be established and the second communications device does not construct the SDP answer message.

For example, the media capability information of the first communications device includes (a1, v1), where a1 is an audio calling frequency of the first communications device, and v1 is a video calling frequency of the first communications device; the media capability information of the second communications device includes (a1, v2), where a1 is an audio calling frequency of the second communications device, and v2 is a video calling frequency of the second communications device. It can be learned that the media capability information of the second communications device and the media capability information of the first communications device do not include a same video calling frequency, but the media capability information of the second communications device and the media capability information of the first communications device include a same audio calling frequency. In this case, the second communications device constructs the SDP answer message. When the SDP answer message is being constructed, the audio support field of the SDP answer message is the same audio calling frequency, the video support field is reserved, and the content of the video support field is set to be empty, that is, the audio support field carried in the SDP answer message constructed by the second communications device is a1, and the video support field carried in the SDP answer message constructed by the second communications device is empty.

Optionally, on the basis of the technical solution of the embodiment shown in FIG. 1, step 102 "Determine whether the media capability information of the first communications device matches media capability information of the second communications device" includes the following steps:
A3: Determine whether the media capability information of the first communications device includes a video calling frequency.

Specifically, the media capability information of the first communications device includes at least an audio calling frequency, and further, the media capability information may further include an audio calling frequency and a video calling frequency; when the media capability information of the second communications device and the media capability information of the first communications device include a same audio calling frequency, and the media capability information of the second communications device and the media capability information of the first communications device include a same video calling frequency, the media capability information of the second communications device matches the media capability information of the first communications device; when the media capability information of the first communications device does not include a video calling frequency, the media capability information of the second communications device definitely does not match the media capability information of the first communications device; therefore, it is first determined whether the media capability information of the first communications device includes a video calling frequency.

A4: If the media capability information of the first communications device does not include a video calling frequency, the media capability information of the first communications device does not match the media capability information of the second communications device.

Specifically, when the media capability information of the second communications device and the media capability information of the first communications device include a same audio calling frequency, and the media capability information of the second communications device and the media capability information of the first communications device include a same video calling frequency, the media capability information of the second communications device matches the media capability information of the first communications device; if the media capability information of the first communications device does not include a video calling frequency, but includes only an audio calling frequency, no matter whether the media capability information of the second communications device includes a video calling frequency, the media capability information of the second communications device does not match the media capability information of the first communications device.

A5: If the media capability information of the first communications device includes a video calling frequency, determine whether the media capability information of the second communications device includes a video calling frequency, where if the media capability information of the second communications device does not include a video calling frequency, the media capability information of the second communications device does not match the media capability information of the first communications device.

Specifically, when the media capability information of the second communications device and the media capability information of the first communications device include a same audio calling frequency, and the media capability information of the second communications device and the media capability information of the first communications device include a same video calling frequency, the media capability information of the second communications device matches the media capability information of the first communications device; if the media capability information of the first communications device includes a video calling frequency, it is determined whether the media capability information of the second communications device includes a video calling frequency, where if the media capability information of the second communications device includes a video calling frequency, the media capability information of the first communications device possibly matches the media capability information of the second communications device, and if the media capability information of the second communications device does not include a video calling frequency, the media capability information of the second communications device does not match the media capability information of the first communications device.

Optionally, after step A5 "If the media capability information of the first communications device includes a video calling frequency, determine whether the media capability information of the second communications device includes a video calling frequency, where if the media capability information of the second communications device does not include a video calling frequency, the media capability information of the second communications device does not match the media capability information of the first communications device", step 102 further includes the following steps:
A6: If the media capability information of the second communications device includes a video calling frequency, determine whether the media capability information of the second communications device and the media capability information of the first communications device include a same audio calling frequency, and whether the media capability information of the second communications device and the media capability information of the first communications device include a same video calling frequency.

A7: If the media capability information of the second communications device and the media capability information of the first communications device include a same audio calling frequency, and the media capability information of the second communications device and the media capability information of the first communications device include a same video calling frequency, the media capability information of the second communications device matches and the media capability information of the first communications device.

A8: If the media capability information of the second communications device and the media capability information of the first communications device include a same audio calling frequency, and the media capability information of the second communications device and the media capability information of the first communications device do not include a same video calling frequency, the media capability information of the second communications device does not match the media capability information of the first communications device.

Specifically, when the media capability information of the first communications device includes an audio calling frequency and a video calling frequency, the media capability information of the second communications device includes an audio calling frequency and a video calling frequency, the media capability information of the second communications device and the media capability information of the first communications device include a same audio calling frequency, and the media capability information of the second communications device and the media capability information of the first communications device include a same video calling frequency, the media capability information of the second communications device matches the media capability information of the first communications device; when the media capability information of the second communications device and the media capability information of the first communications device include a same audio calling frequency, and the media capability information of the second communications device and the media capability information of the first communications device do not include a same video calling frequency, the media capability information of the second communications device does not match the media capability information of the first communications device.

In the video data transmission method provided in this embodiment of the present invention, a second communications device receives a video call request sent by a first communications device, where the video call request carries media capability information of the first communications device; determines whether the media capability information of the first communications device matches media capability information of the second communications device; constructs a Session Description Protocol SDP answer message when the media capability information of the second communications device does not match the media capability information of the first communications device, and the media capability information of the second communications device and the media capability information of the first communications device include a same audio calling frequency, where content of a video support field of the SDP answer message is empty, and an audio support field of the SDP answer message is the same audio calling frequency; and sends the SDP answer massage to the first communications device, so that the first communications device and the second communications device transmit video data. By using the technical solutions provided in the present invention, when the media capability information of the second communications device does not match the media capability information of the first communications device, a video transmission channel can still be established between the first communications device and the second communications device for video data transmission, and in addition, the first communications device and the second communications device can use other functions in video calling. Compared with the prior art, a problem that a call fails to be established when the media capability information of the second communications device does not match the media capability information of the first communications device is avoided.

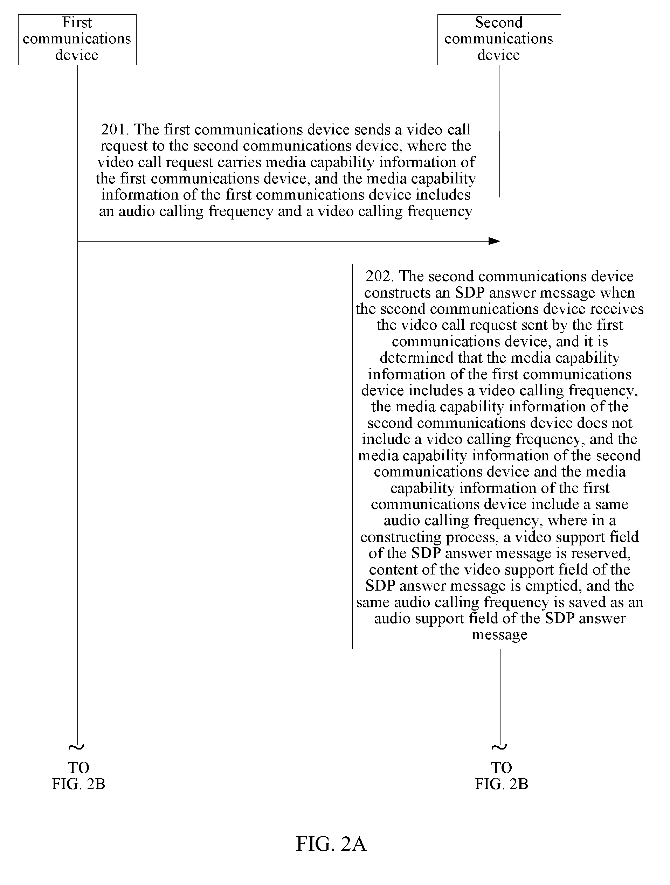

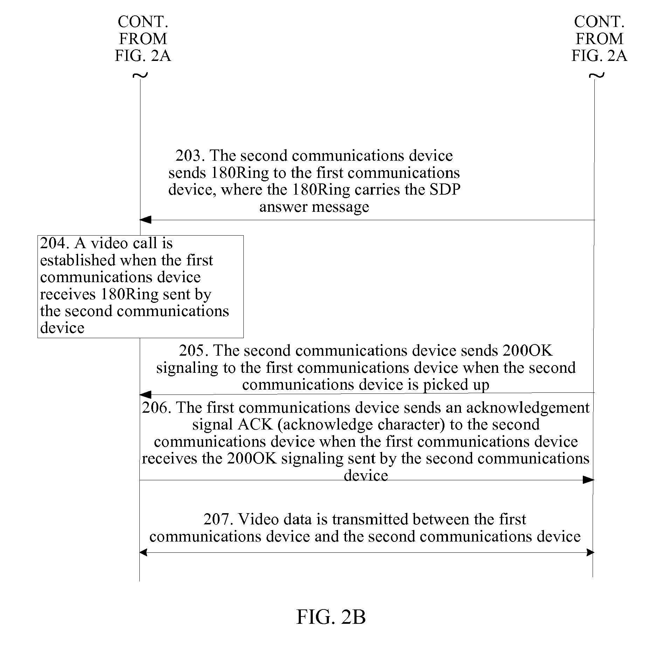

FIG. 2A and FIG. 2B are a signaling interworking diagram of video data transmission according to an embodiment of the present invention. In this embodiment, a first communications device has a camera and the camera is in a normal working state, that is, the first communications device has a video communications capability, and media capability information of the first communications device includes an audio calling frequency and a video calling frequency; a second communications device has no camera or a camera of the second communications device is in an abnormal state, that is, the second communications device has no video communications capability, and media capability information of the second communications device includes only an audio calling frequency. Referring to FIG. 2A and FIG. 2B, a process of a method includes:
201: A first communications device sends a video call request to a second communications device, where the video call request carries media capability information of the first communications device, and the media capability information of the first communications device includes an audio calling frequency and a video calling frequency.

Specifically, the first communications device has a video communications capability, that is, the media capability information of the first communications device includes an audio calling frequency and a video calling frequency.

Further, when the media capability information of the first communications device may include multiple groups of audio calling frequencies and video calling frequencies, the video call request sent by the first communications device to the second communications device may include all groups of the audio calling frequencies and the video calling frequencies that are of the first communications devices, and may also include a part of the audio calling frequencies and a part of the video calling frequencies that are of the first communications device.

For example, when the media capability information of the first communications device includes (a1, a2, v1, v2), where a1 and a2 are audio calling frequencies in the media capability information of the first communications device, and v1 and v2 are video calling frequencies in the media capability information of the first communications device.

Optionally, the media capability information carried in the video call request sent by the first communications device to the second communications device includes all groups of the audio calling frequencies and the video calling frequencies, that is, the video call request carries (a1, a2, v1, v2).

Optionally, the media capability information carried in the video call request sent by the first communications device to the second communications device includes the audio calling frequencies and a part of the video calling frequencies, that is, the video call request carries (a1, v1), or carries (a1, v2), or carries (a2, v1), or carries (a2, v2).

A person skilled in the art may learn that the video call request may be triggered by using video calling software installed on the first communications device, and may also be triggered by using a function that comes with a system of the first communications device. When a user of the first communications device needs to make a video call, the user may enable this software or function and send a video call request to a specified user. This software or function can detect a hardware device of the first communications device, and acquire the media capability information of the first communications device; or this software or function can store the media capability information of the first communications device.

202: The second communications device constructs an SDP answer message when the second communications device receives the video call request sent by the first communications device, and determines that the media capability information of the first communications device includes a video calling frequency, the media capability information of the second communications device does not include a video calling frequency, and the media capability information of the second communications device and the media capability information of the first communications device include a same audio calling frequency, where in a constructing process, a video support field of the SDP answer message is reserved, content of the video support field of the SDP answer message is set to be empty, the same audio calling frequency is saved as an audio support field of the SDP answer message.

Specifically, when receiving the video call request sent by the first communications device, the second communications device determines whether the media capability information of the first communications device includes a video calling frequency. If the media capability information of the first communications device includes a video calling frequency, but the media capability information of the second communications device does not include a video calling frequency, the second communications device determines whether the media capability information of the second communications device and the media capability information of the first communications device include a same audio calling frequency. If the media capability information of the second communications device and the media capability information of the first communications device include a same audio calling frequency, the second communications device constructs the SDP answer message; and if the media capability information of the second communications device and the media capability information of the first communications device do not include a same audio calling frequency, the second communications device does not construct the SDP answer message and a call between the first communications device and the second communications device fails to be established.

For example, when the media capability information of the first communications device includes (a1, a2, v1, v2), optionally, the video call request sent by the first communications device to the second communications device carries all groups of audio calling frequencies and video calling frequencies in the media capability information of the first communications device, that is, the video call request carries the media capability information (a1, a2, v1, v2) of the first communications device. When receiving the video call request sent by the first communications device, the second communications device determines, according to the media capability information of the second communications device, whether the media capability information of the second communications device matches the media capability information of the first communications device. In this embodiment, the second communications device has no camera or its camera is in an abnormal state, that is, the media capability information of the second communications device includes only an audio calling frequency. For example, when the audio calling frequency of the second communications device is a1, and the media capability information of the second communications device does not match the media capability information of the first communications device but the media capability information of the second communications device and the media capability information of the first communications device include a same audio calling frequency, the second communications device constructs the SDP answer message, where the audio support field of the SDP answer message is a1, and the video support field is empty; when the audio calling frequency of the second communications device is a2, and the media capability information of the second communications device does not match the media capability information of the first communications device but the media capability information of the second communications device and the media capability information of the first communications device include a same audio calling frequency, the second communications device constructs the SDP answer message, where the audio support field of the SDP answer message is a2, and the video support field is empty; and when the audio calling frequency of the second communications device is a3 and a3 is not equal to a1 or a2, the media capability information of the second communications device and the media capability information of the first communications device do not include a same audio calling frequency, the second communications device does not construct the SDP answer message and a call between the first communications device and the second communications device fails to be established.

For another example, when the media capability information of the first communications device includes (a1, a2, v1, v2), the media capability information carried in the video call request sent by the first communications device to the second communications device is (a1, v1), or (a2, v1), or (a1, v2), or (a2, v2). It is assumed that the media capability information of the second communications device includes only a2. When the video call request sent by the first communications device to the second communications device carries the media capability information (a1, v1) of the first communications device, the media capability information of the second communications device and the media capability information of the first communications device do not include a same audio calling frequency, so that when a call fails to be established, the first communications device may send a video call request that carries (a2, v2) to the second communications device. When the second communications device receives the video call request that carries (a2, v2), matching of media capability information continues to be performed.

203: The second communications device sends 180Ring to the first communications device, where the 180Ring carries the SDP answer message.

The 180Ring is an answer message that is sent by the second communications device to the first communications device when the construction of the SDP answer message is complete.

When the media capability information of the second communications device and the media capability information of the first communications device include a same audio calling frequency, the second communications device constructs the SDP answer message and the second communications device sends, to the first communications device, the 180Ring that carries the constructed SDP answer message.

204: A video call is established when the first communications device receives the 180Ring sent by the second communications device.

Specifically, when the first communications device receives the 180Ring sent by the second communications device, the first communications device can hear a ringtone of the second communications device, and at this time, the establishment of the video call between the first communications device and the second communications device is complete.

205: The second communications device sends 200OK signaling to the first communications device when the second communications device is picked up.

Specifically, 200 indicates a success, and the second communications device sends the 200OK signaling to the first communications device when the second communications device is picked up.

206: The first communications device sends an acknowledgment signal ACK (acknowledge character) to the second communications device when the first communications device receives the 200OK signaling sent by the second communications device.

Specifically, the ACK is an acknowledgment signal, indicating that the first communications device has received the 200OK signaling of the second communications device. At this time, a video call is established between the first communications device and the second communications device.

207: Video data is transmitted between the first communications device and the second communications device.

Specifically, the second communications device sends the constructed SDP answer message to the first communications device; a network server allocates an audio transmission channel and a video transmission channel to the first communications device and the second communications device; and the first communications device and the second communications device transmit audio data through the allocated audio transmission channel and transmit video data through the allocated video transmission channel.

Further, when a video transmission channel is established between the first communications device and the second communications device, not only video data can be transmitted between the first communications device and the second communications device, but also a file can be transmitted between the first communications device and the second communications device; and in addition, the first communications device and the second communications device can use other functions in video calling.

In the video data transmission method provided in this embodiment of the present invention, a second communications device receives a video call request sent by a first communications device, where the video call request carries media capability information of the first communications device; determines whether the media capability information of the first communications device matches media capability information of the second communications device; constructs a Session Description Protocol SDP answer message when the media capability information of the second communications device does not match the media capability information of the first communications device, and the media capability information of the second communications device and the media capability information of the first communications device include a same audio calling frequency, where content of a video support field of the SDP answer message is empty, and an audio support field of the SDP answer message is the same audio calling frequency; and sends the SDP answer massage to the first communications device, so that the first communications device and the second communications device transmit video data. By using the technical solutions provided in the present invention, when the media capability information of the second communications device does not match the media capability information of the first communications device, a video transmission channel can still be established between the first communications device and the second communications device for video data transmission, and in addition, the first communications device and the second communications device can use other functions in video calling. Compared with the prior art, a problem that a call fails to be established when the media capability information of the second communications device does not match the media capability information of the first communications device is avoided.

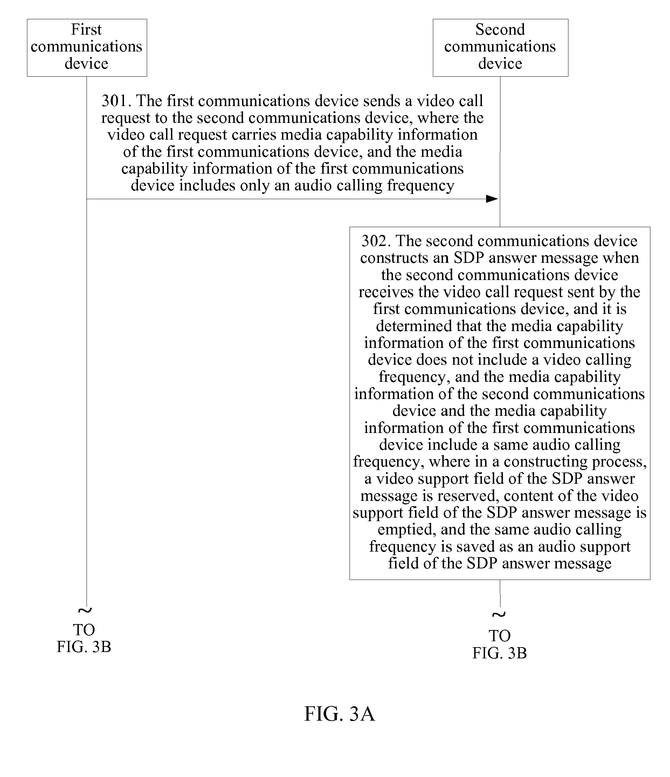

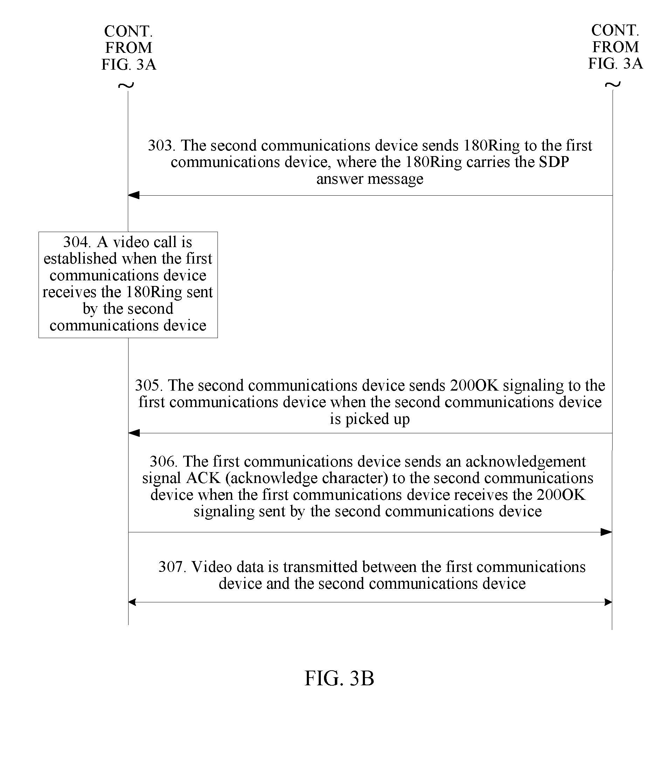

FIG. 3A and FIG. 3B are a signaling interworking diagram of video data transmission according to an embodiment of the present invention. In this embodiment, a first communications device has no camera or a camera of the first communications device is in an abnormal state, that is, the first communications device has no video communications capability, and media capability information of the first communications device includes only an audio calling frequency; a second communications device has a camera and the camera is in a normal working state, that is, the second communications device has a video communications capability, and media capability information of the second communications device includes an audio calling frequency and a video calling frequency. Referring to FIG. 3A and FIG. 3B, a process of a method includes:

301: A first communications device sends a video call request to a second communications device, where the video call request carries media capability information of the first communications device, and the media capability information of the first communications device includes only an audio calling frequency.

Specifically, because the first communications device has no camera or a camera of the first communications device is abnormal, the first communications device only supports an audio call and does not support a video call. The first communications device has no video communications capability, that is, the media capability information of the first communications device includes only an audio calling frequency.

302: The second communications device constructs an SDP answer message when the second communications device receives the video call request sent by the first communications device, and determines that the media capability information of the first communications device does not include a video calling frequency and the media capability information of the second communications device and the media capability information of the first communications device include a same audio calling frequency, where in a constructing process, a video support field of the SDP answer message is reserved, content of the video support field of the SDP answer message is set to be empty, and the same audio calling frequency is saved as an audio support field of the SDP answer message.

Specifically, when receiving the video call request sent by the first communications device, the second communications device determines whether the media capability information of the first communications device includes a video calling frequency. If the media capability information of the first communications device does not include a video calling frequency, but the media capability information of the second communications device includes a video calling frequency, the second communications device determines whether the media capability information of the second communications device and the media capability information of the first communications device include a same audio calling frequency. If the media capability information of the second communications device and the media capability information of the first communications device include a same audio calling frequency, the second communications device constructs the SDP answer message, where when the second communications device is constructing the SDP answer message, the video support field of the SDP answer message is reserved, the content of the video support field is set to be empty, and the same audio calling frequency is saved as the audio support field of the SDP answer message; and if the media capability information of the second communications device and the media capability information of the first communications device do not include a same audio calling frequency, the second communications device does not construct the SDP answer message and a call between the first communications device and the second communications device fails to be established.

303: The second communications device sends 180Ring to the first communications device, where the 180Ring carries the SDP answer message.

304: A video call is established when the first communications device receives the 180Ring sent by the second communications device.

305: The second communications device sends 200OK signaling to the first communications device when the second communications device is picked up.

306: The first communications device sends an acknowledgment signal ACK to the second communications device when the first communications device receives the 200OK signaling sent by the second communications device.

307: Video data is transmitted between the first communications device and the second communications device.

Specifically, steps 303 to 307 are the same as steps 203 to 207, and details are not described herein again.

Further, when a video transmission channel is established between the first communications device and the second communications device, not only video data can be transmitted between the first communications device and the second communications device, but also a file can be transmitted between the first communications device and the second communications device; and in addition, the first communications device and the second communications device can use other functions in video calling.

In the video data transmission method provided in this embodiment of the present invention, a second communications device receives a video call request sent by a first communications device, where the video call request carries media capability information of the first communications device; determines whether the media capability information of the first communications device matches media capability information of the second communications device; constructs a Session Description Protocol SDP answer message when the media capability information of the second communications device does not match the media capability information of the first communications device, and the media capability information of the second communications device and the media capability information of the first communications device include a same audio calling frequency, where content of a video support field of the SDP answer message is empty, and an audio support field of the SDP answer message is the same audio calling frequency; and sends the SDP answer massage to the first communications device, so that the first communications device and the second communications device transmit video data. By using the technical solutions provided in the present invention, when the media capability information of the second communications device does not match the media capability information of the first communications device, a video transmission channel can still be established between the first communications device and the second communications device for video data transmission, and in addition, the first communications device and the second communications device can use other functions in video calling. Compared with the prior art, a problem that a call fails to be established when the media capability information of the second communications device does not match the media capability information of the first communications device is avoided.

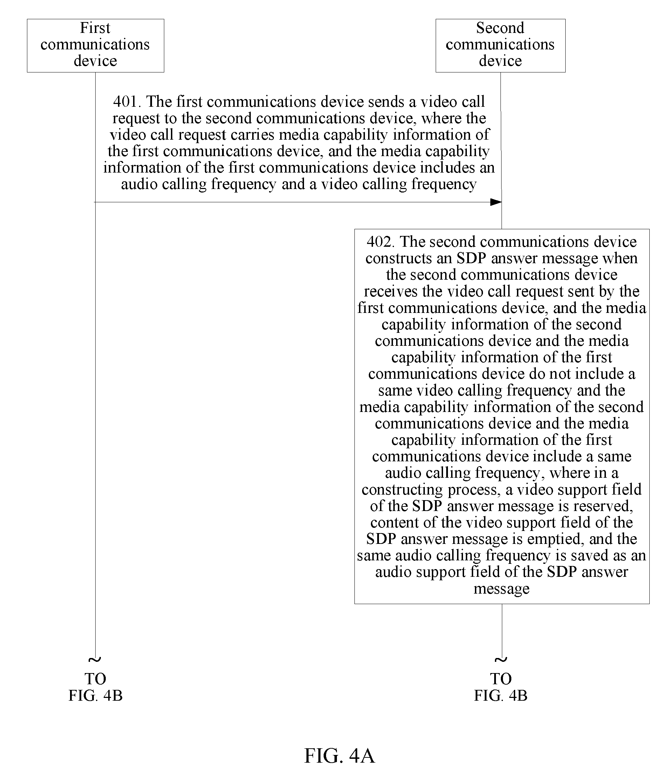

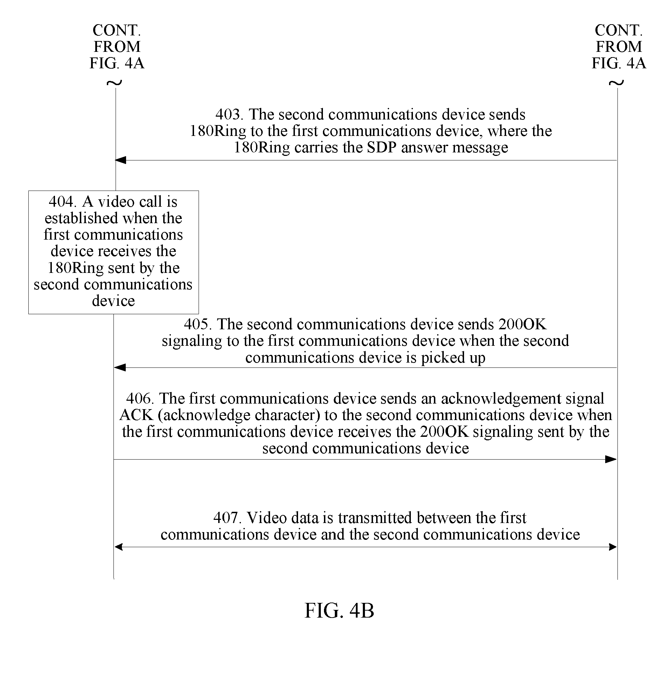

FIG. 4A and FIG. 4B are a signaling interworking diagram of video data transmission according to an embodiment of the present invention. In this embodiment, a first communications device has a camera and the camera is in a normal working state, that is, the first communications device has a video communications capability, and media capability information of the first communications device includes an audio calling frequency and a video calling frequency; a second communications device has a camera and the camera is in a normal working state, that is, the second communications device has a video communications capability, and media capability information of the second communications device includes an audio calling frequency and a video calling frequency; and the media capability information of the first communications device and the media capability information of the second communications device do not include a same video calling frequency. Referring to FIG. 4A and FIG. 4B, a process of a method includes:
401: A first communications device sends a video call request to a second communications device, where the video call request carries media capability information of the first communications device, and the media capability information of the first communications device includes an audio calling frequency and a video calling frequency.

Specifically, because the first communications device has a video communications capability, the media capability information of the first communications device includes an audio calling frequency and a video calling frequency.

The video call request carries the media capability information of the first communications device, where the media capability information includes (a1, v1).

402: The second communications device constructs an SDP answer message when the second communications device receives the video call request sent by the first communications device, and the media capability information of the second communications device and the media capability information of the first communications device do not include a same video calling frequency and the media capability information of the second communications device and the media capability information of the first communications device include a same audio calling frequency, where in a constructing process, a video support field of the SDP answer message is reserved, content of the video support field of the SDP answer message is set to be empty, and the same audio calling frequency is saved as an audio support field of the SDP answer message.

Specifically, when receiving the video call request sent by the first communications device, the second communications device determines whether the media capability information of the first communications device includes a video calling frequency. If the media capability information of the first communications device includes a video calling frequency, and the media capability information of the second communications device includes a video calling frequency, the second communications device determines whether the media capability information of the second communications device and the media capability information of the first communications device include a same video calling frequency, and whether the media capability information of the second communications device and the media capability information of the first communications device include a same audio calling frequency. If the media capability information of the second communications device and the media capability information of the first communications device include a same audio calling frequency, and the media capability information of the second communications device and the media capability information of the first communications device do not include a same video calling frequency, the media capability information of the second communications device does not match the media capability information of the first communications device.

For example, when the media capability information of the first communications device includes (a1, v1) and the media capability information of the second communications device includes (a1, v2), the media capability information of the second communications device and the media capability information of the first communications device include a same audio calling frequency, and the media capability information of the second communications device and the media capability information of the first communications device do not include a same video calling frequency. Then the media capability information of the first communications device does not match the media capability information of the second communications device. However, the media capability information of the first communications device and the media capability information of the second communications device include a same audio calling frequency, then the second communications device constructs the SDP answer message, where the audio support field of the SDP answer message is a1, and the content of the video support field is empty.

However, if the media capability information of the first communications device includes (a1, v1), and the media capability information of the second communications device includes (a2, v2), the media capability information of the second communications device and the media capability information of the first communications device do not include a same audio calling frequency, and the media capability information of the second communications device and the media capability information of the first communications device do not include a same video calling frequency, and then a call between the first communications device and the second communications device fails to be established.

403: The second communications device sends 180Ring to the first communications device, where the 180Ring carries the SDP answer message.

404: A video call is established when the first communications device receives the 180Ring sent by the second communications device.

405: The second communications device sends 200OK signaling to the first communications device when the second communications device is picked up.

406: The first communications device sends an acknowledgment signal ACK to the second communications device when the first communications device receives the 200OK signaling sent by the second communications device.

407: Video data is transmitted between the first communications device and the second communications device.

Specifically, steps 403 to 407 are the same as steps 203 to 207, and details are not described herein again.

Further, when a video transmission channel is established between the first communications device and the second communications device, not only video data can be transmitted between the first communications device and the second communications device, but also a file can be transmitted between the first communications device and the second communications device; and in addition, the first communications device and the second communications device can use other functions in video calling.

In the video data transmission method provided in this embodiment of the present invention, a second communications device receives a video call request sent by a first communications device, where the video call request carries media capability information of the first communications device; determines whether the media capability information of the first communications device matches media capability information of the second communications device; constructs a Session Description Protocol SDP answer message when the media capability information of the second communications device does not match the media capability information of the first communications device, and the media capability information of the second communications device and the media capability information of the first communications device include a same audio calling frequency, where content of a video support field of the SDP answer message is empty, and an audio support field of the SDP answer message is the same audio calling frequency; and sends the SDP answer massage to the first communications device, so that the first communications device and the second communications device transmit video data. By using the technical solutions provided in the present invention, when the media capability information of the second communications device does not match the media capability information of the first communications device, a video transmission channel can still be established between the first communications device and the second communications device for video data transmission, and in addition, the first communications device and the second communications device can use other functions in video calling. Compared with the prior art, a problem that a call fails to be established when the media capability information of the second communications device does not match the media capability information of the first communications device is avoided.

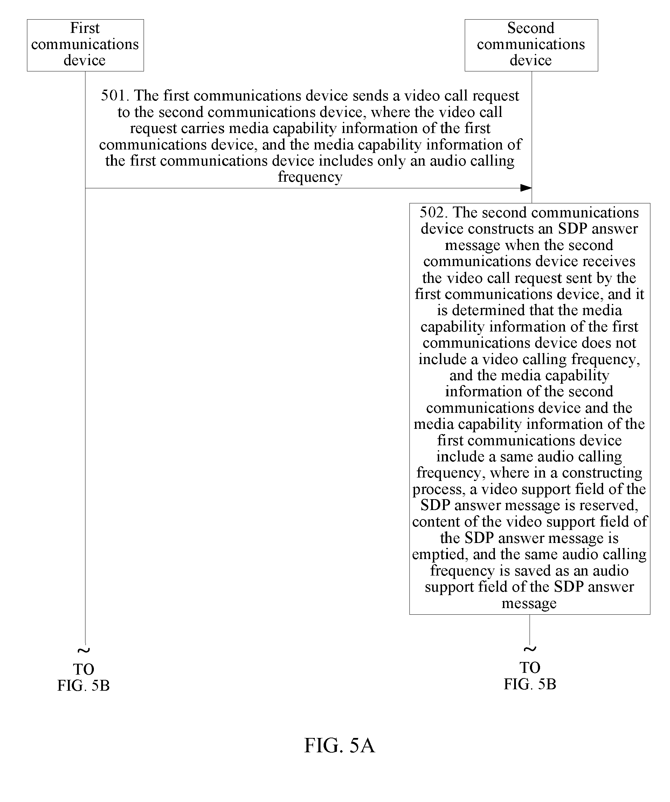

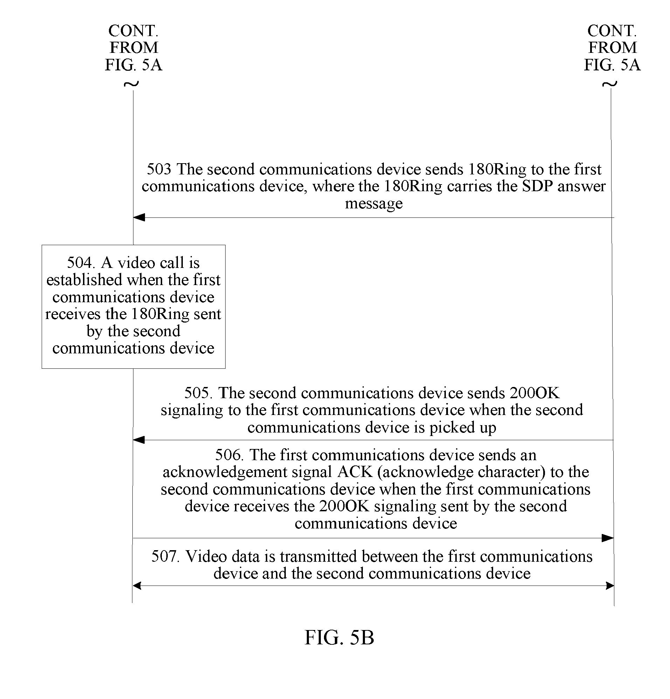

FIG. 5A and FIG 5B are a signaling interworking diagram of video data transmission according to an embodiment of the present invention. In this embodiment, a first communications device has no camera or a camera of the first communications device is in an abnormal state, that is, the first communications device has no video communications capability, and media capability information of the first communications device includes only an audio calling frequency; a second communications device has no camera or a camera of the second communications device is in an abnormal state, and therefore, the second communications device has no video communications capability either, and media capability information of the second communications device includes only an audio calling frequency. Referring to FIG. 5A and FIG 5B, a process of a method includes:
501: A first communications device sends a video call request to a second communications device, where the video call request carries media capability information of the first communications device, and the media capability information of the first communications device includes only an audio calling frequency.

Specifically, because the first communications device has no video communications capability, the media capability information of the first communications device includes only an audio calling frequency.

502: The second communications device constructs an SDP answer message when the second communications device receives the video call request sent by the first communications device, and determines that the media capability information of the first communications device does not include a video calling frequency and the media capability information of the second communications device and the media capability information of the first communications device include a same audio calling frequency, where in a constructing process, a video support field of the SDP answer message is reserved, content of the video support field of the SDP answer message is set to be empty, the same audio calling frequency is saved as an audio support field of the SDP answer message.

Specifically, when receiving the video call request sent by the first communications device, the second communications device determines whether the media capability information of the first communications device includes a video calling frequency. If the media capability information of the first communications device does not include a video calling frequency, because the media capability information of the second communications device does not include a video calling frequency either, the second communications device determines whether the media capability information of the second communications device and the media capability information of the first communications device include a same audio calling frequency. If the media capability information of the second communications device and the media capability information of the first communications device include a same audio calling frequency, the second communications device constructs the SDP answer message, where the audio support field of the SDP answer message is the same audio calling frequency, the video support field is reserved, and the content of the video support field is empty; and if the media capability information of the second communications device and the media capability information of the first communications device do not include a same audio calling frequency, the second communications device does not construct the SDP answer message and a call between the first communications device and the second communications device fails to be established.

503: The second communications device sends 180Ring to the first communications device, where the 180Ring carries the SDP answer message.

504: A video call is established when the first communications device receives the 180Ring sent by the second communications device.

505: The second communications device sends 200OK signaling to the first communications device when the second communications device is picked up.

506: The first communications device sends an acknowledgment signal ACK to the second communications device when the first communications device receives the 200OK signaling sent by the second communications device.

507: Video data is transmitted between the first communications device and the second communications device.

Specifically, steps 503 to 507 are the same as steps 203 to 207, and details are not described herein again.

Further, when a video transmission channel is established between the first communications device and the second communications device, not only video data can be transmitted between the first communications device and the second communications device, but also a file can be transmitted between the first communications device and the second communications device; and in addition, the first communications device and the second communications device can use other functions in video calling.

In the video data transmission method provided in this embodiment of the present invention, a second communications device receives a video call request sent by a first communications device, where the video call request carries media capability information of the first communications device; determines whether the media capability information of the first communications device matches media capability information of the second communications device; constructs a Session Description Protocol SDP answer message when the media capability information of the second communications device does not match the media capability information of the first communications device, and the media capability information of the second communications device and the media capability information of the first communications device include a same audio calling frequency, where content of a video support field of the SDP answer message is empty, and an audio support field of the SDP answer message is the same audio calling frequency; and sends the SDP answer massage to the first communications device, so that the first communications device and the second communications device transmit video data. By using the technical solutions provided in the present invention, when the media capability information of the second communications device does not match the media capability information of the first communications device, a video transmission channel can still be established between the first communications device and the second communications device for video data transmission, and in addition, the first communications device and the second communications device can use other functions in video calling. Compared with the prior art, a problem that a call fails to be established when the media capability information of the second communications device does not match the media capability information of the first communications device is avoided.

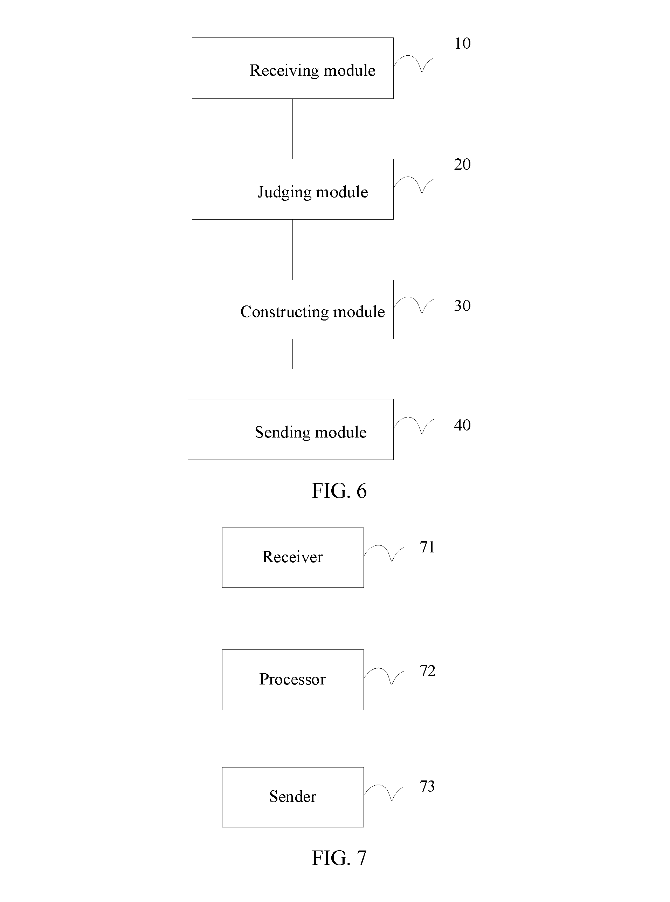

FIG. 6 is a schematic structural diagram of a video data transmission apparatus according to an embodiment of the present invention. Referring to FIG. 6, the apparatus includes:
a receiving module 10, configured to receive a video call request sent by a first communications device, where the video call request carries media capability information of the first communications device;
a judging module 20, configured to determine whether media capability information of the local communications device matches the media capability information of the first communications device;
a constructing module 30, configured to construct a Session Description Protocol SDP answer message when the media capability information of the local communications device does not match the media capability information of the first communications device, and the media capability information of the local communications device and the media capability information of the first communications device include a same audio calling frequency, where content of a video support field of the SDP answer message is empty, and an audio support field of the SDP answer message is the same audio calling frequency; and
a sending module 40, configured to send the SDP answer message to the first communications device, so that the first communications device and the local communications device transmit video data.

Optionally, the constructing module 30 is specifically configured to construct the SDP answer message when the media capability information of the local communications device and the media capability information of the first communications device include a same audio calling frequency, and the media capability information of the local communications device and the media capability information of the first communications device do not include a same video calling frequency, where the audio support field of the SDP answer message is the same audio calling frequency, the video support field is reserved, and the content of the video support field is empty.

The constructing module 30 is further specifically configured to construct the SDP answer message when the media capability information of the local communications device and the media capability information of the first communications device include a same audio calling frequency, and neither the media capability information of the local communications device nor the media capability information of the first communications device includes a video calling frequency, where the audio support field of the SDP answer message is the same audio calling frequency, the video support field is reserved, and the content of the video support field is empty.

Optionally, the judging module 20 includes:
a judging unit, configured to determine whether the media capability information of the first communications device includes a video calling frequency; and
a matching and determining unit, configured to, if the media capability information of the first communications device does not include a video calling frequency, determine that the media capability information of the local communications device does not match the media capability information of the first communications device; where
the matching and determining unit is further configured to determine, if the media capability information of the first communications device includes a video calling frequency, whether the media capability information of the local communications device includes a video calling frequency, where if the media capability information of the local communications device does not include a video calling frequency, the media capability information of the local communications device does not match the media capability information of the first communications device.

Optionally, the judging unit is further configured to determine, if the media capability information of the local communications device includes a video calling frequency, whether the media capability information of the local communications device and the media capability information of the first communications device include a same audio calling frequency, and whether the media capability information of the local communications device and the media capability information of the first communications device include a same video calling frequency.

The matching and determining unit is further configured to, if the media capability information of the local communications device and the media capability information of the first communications device include a same audio calling frequency, and the media capability information of the local communications device and the media capability information of the first communications device do not include a same video calling frequency, determine that the media capability information of the local communications device matches the media capability information of the first communications device.

The matching and determining unit is further configured to, if the media capability information of the local communications device and the media capability information of the first communications device include a same audio calling frequency, and the media capability information of the local communications device and the media capability information of the first communications device do not include a same video calling frequency, determine that the media capability information of the local communications device does not match the media capability information of the first communications device.

It should be noted that: When the video data transmission apparatus provided in the foregoing embodiment transmits video data, division of the foregoing functional modules is used merely as an example for description; in an actual application, the foregoing functions may be allocated to different functional modules to complete according to requirements; that is, an internal structure of the device is divided into different functional modules to complete all or a part of functions described above. In addition, the video data transmission apparatus provided by the foregoing embodiment pertains to a same concept as the embodiments of the video data transmission method, and reference may be made to the method embodiments for a specific implementation process of the video data transmission apparatus, which is not described herein again.

In the video data transmission apparatus provided in this embodiment of the present invention, a receiving module receives a video call request sent by a first communications device, where the video call request carries media capability information of the first communications device; a judging module determines whether the media capability information of the first communications device matches media capability information of a local communications device; and a constructing module constructs a Session Description Protocol SDP answer message when the media capability information of the local communications device does not match the media capability information of the first communications device, and the media capability information of the local communications device and the media capability information of the first communications device include a same audio calling frequency, where content of a video support field of the SDP answer message is empty, and an audio support field of the SDP answer message is the same audio calling frequency; and a sending module sends the SDP answer massage to the first communications device, so that the first communications device and the local communications device transmit video data. By using the technical solutions provided in the present invention, when the media capability information of the local communications device does not match the media capability information of the first communications device, a video transmission channel can still be established for video data transmission between the first communications device and the local communications device, and in addition, the first communications device and the local communications device can use other functions in video calling. Compared with the prior art, a problem that a call fails to be established when the media capability information of the local communications device does not match the media capability information of the first communications device is avoided.

A person of ordinary skill in the art may understand that all or a part of the steps of the foregoing embodiments may be implemented by hardware or a program instructing relevant hardware. The program may be stored in a computer readable storage medium. The storage medium may include: a read-only memory, a magnetic disk, or an optical disc.

FIG. 7 is a schematic structural diagram of a communications device according to an embodiment of the present invention. Referring to FIG. 7, the communications device includes: a receiver 71, a sender 72, and a processor 73, where the receiver 71 is coupled with the processor 72, and the processor 72 is coupled with the sender 73.

The receiver 71 is configured to receive a video call request sent by a first communications device, where the video call request carries media capability information of the first communications device.

The processor 72 is configured to determine whether media capability information of a local communications device matches the media capability information of the first communications device.

The processor 72 is further configured to construct a Session Description Protocol SDP answer message when the media capability information of the local communications device does not match the media capability information of the first communications device, and the media capability information of the local communications device and the media capability information of the first communications device includes a same audio calling frequency, where content of a video support field of the SDP answer message is empty, and an audio support field of the SDP answer message is the same audio calling frequency.

The sender 73 is configured to send the SDP answer message to the first communications device, so that the first communications device and the local communications device transmit video data.

Optionally, the processor 72 is further specifically configured to construct the SDP answer message when the media capability information of the local communications device and the media capability information of the first communications device include a same audio calling frequency, and the media capability information of the local communications device and the media capability information of the first communications device do not include a same video calling frequency, where the audio support field of the SDP answer message is the same audio calling frequency, the video support field is reserved, and the content of the video support field is empty.

The processor 72 is further specifically configured to construct the SDP answer message when the media capability information of the local communications device and the media capability information of the first communications device include a same audio calling frequency, and neither the media capability information of the local communications device nor the media capability information of the first communications device includes a video calling frequency, where the audio support field of the SDP answer message is the same audio calling frequency, the video support field is reserved, and the content of the video support field is empty.

Optionally, the processor 72 is further configured to: determine whether the media capability information of the first communications device includes a video calling frequency, where if the media capability information of the first communications device does not include a video calling frequency, the media capability information of the local communications device does not match the media capability information of the first communications device; and determine, if the media capability information of the first communications device includes a video calling frequency, whether the media capability information of the local communications device includes a video calling frequency, where if the media capability information of the local communications device does not include a video calling frequency, the media capability information of the local communications device does not match the media capability information of the first communications device.

Optionally, the processor 72 is further configured to determine, if the media capability information of the local communications device includes a video calling frequency, whether the media capability information of the local communications device and the media capability information of the first communications device include a same audio calling frequency, and whether the media capability information of the local communications device and the media capability information of the first communications device include a same video calling frequency, where if the media capability information of the local communications device and the media capability information of the first communications device include a same audio calling frequency, and the media capability information of the local communications device and the media capability information of the first communications device do not include a same video calling frequency, the media capability information of the local communications device matches the media capability information of the first communications device; and if the media capability information of the local communications device and the media capability information of the first communications device include a same audio calling frequency, and the media capability information of the local communications device and the media capability information of the first communications device do not include a same video calling frequency, the media capability information of the local communications device does not match the media capability information of the first communications device.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A video data transmission method, wherein the method comprises:
receiving, by a second communications device, a video call request sent by a first communications device, wherein the video call request carries media capability information of the first communications device;
determining whether media capability information of the second communications device matches the media capability information of the first communications device;
constructing a Session Description Protocol SDP answer message when the media capability information of the second communications device does not match the media capability information of the first communications device, and the media capability information of the second communications device and the media capability information of the first communications device comprise a same audio calling frequency, wherein content of a video support field of the SDP answer message is empty, and an audio support field of the SDP answer message is the same audio calling frequency; and
sending the SDP answer message to the first communications device, so that the first communications device and the second communications device transmit video data.

2. The method according to claim 1, wherein the constructing a Session Description Protocol SDP answer message when the media capability information of the second communications device does not match the media capability information of the first communications device, and the media capability information of the second communications device and the media capability information of the first communications device comprise a same audio calling frequency, wherein content of a video support field of the SDP answer message is empty, and an audio support field of the SDP answer message is the same audio calling frequency, specifically comprises:
constructing the SDP answer message when the media capability information of the second communications device and the media capability information of the first communications device comprise a same audio calling frequency, and the media capability information of the second communications device and the media capability information of the first communications device do not comprise a same video calling frequency, wherein the audio support field of the SDP answer message is the same audio calling frequency, the video support field is reserved, and the content of the video support field is empty;
constructing the SDP answer message when the media capability information of the second communications device and the media capability information of the first communications device comprise a same audio calling frequency, and neither the media capability information of the second communications device nor the media capability information of the first communications device comprises a video calling frequency, wherein the audio support field of the SDP answer message is the same audio calling frequency, the video support field is reserved, and the content of the video support field is empty.

3. The method according to claim 1, wherein the determining whether media capability information of the second communications device matches the media capability information of the first communications device, comprises:
determining whether the media capability information of the first communications device comprises a video calling frequency, wherein
if the media capability information of the first communications device does not comprise a video calling frequency, the media capability information of the second communications device does not match the media capability information of the first communications device; and
determining, if the media capability information of the first communications device comprises a video calling frequency, whether the media capability information of the second communications device comprises a video calling frequency, wherein if the media capability information of the second communications device does not comprise a video calling frequency, the media capability information of the second communications device does not match the media capability information of the first communications device.

4. The method according to claim 3, wherein after the determining, if the media capability information of the first communications device comprises a video calling frequency, whether the media capability information of the second communications device comprises a video calling frequency, the method further comprises:
if the media capability information of the second communications device comprises a video calling frequency, determining whether the media capability information of the second communications device and the media capability information of the first communications device comprise a same audio calling frequency, and whether the media capability information of the second communications device and the media capability information of the first communications device comprise a same video calling frequency; wherein
if the media capability information of the second communications device and the media capability information of the first communications device comprise a same audio calling frequency, and the media capability information of the second communications device and the media capability information of the first communications device comprise a same video calling frequency, the media capability information of the second communications device matches the media capability information of the first communications device; and
if the media capability information of the second communications device and the media capability information of the first communications device comprise a same audio calling frequency, and the media capability information of the second communications device and the media capability information of the first communications device do not comprise a same video calling frequency, the media capability information of the second communications device does not match the media capability information of the first communications device.

5. A video data transmission apparatus, wherein the apparatus comprises:
a receiving module, configured to receive a video call request sent by a first communications device, wherein the video call request carries media capability information of the first communications device;
a judging module, configured to determine whether media capability information of a local communications device matches the media capability information of the first communications device;
a constructing module, configured to construct a Session Description Protocol SDP answer message when the media capability information of the local communications device does not match the media capability information of the first communications device, and the media capability information of the local communications device and the media capability information of the first communications device comprise a same audio calling frequency, wherein content of a video support field of the SDP answer message is empty, and an audio support field of the SDP answer message is the same audio calling frequency; and
a sending module, configured to send the SDP answer message to the first communications device, so that the first communications device and the local communications device transmit video data.

6. The apparatus according to claim 5, wherein the constructing module is specifically configured to construct the SDP answer message when the media capability information of the local communications device and the media capability information of the first communications device comprise a same audio calling frequency, and the media capability information of the local communications device and the media capability information of the first communications device do not comprise a same video calling frequency, wherein the audio support field of the SDP answer message is the same video calling frequency, the video support field is reserved, and the content of the video support field is empty;
the constructing module is further specifically configured to construct the SDP answer message when the media capability information of the local communications device and the media capability information of the first communications device comprise a same audio calling frequency, and neither the media capability information of the local communications device nor the media capability information of the first communications device comprises a video calling frequency, wherein the audio support field of the SDP answer message is the same audio calling frequency, the video support field is reserved, and the content of the video support field is empty.

7. The apparatus according to claim 5, wherein the judging module comprises:
a judging unit, configured to determine whether the media capability information of the first communications device comprises a video calling frequency; and
a matching and determining unit, configured to, if the media capability information of the first communications device does not comprise a video calling frequency, determine that the media capability information of the local communications device does not match the media capability information of the first communications device; wherein
the matching and determining unit is further configured to determine, if the media capability information of the first communications device comprises a video calling frequency, whether the media capability information of the local communications device comprises a video calling frequency, wherein if the media capability information of the local communications device does not comprise a video calling frequency, the media capability information of the local communications device does not match the media capability information of the first communications device.

8. The apparatus according to claim 7, wherein the judging unit is further configured to determine, if the media capability information of the local communications device comprises a video calling frequency, whether the media capability information of the local communications device and the media capability information of the first communications device comprise a same audio calling frequency, and whether the media capability information of the local communications device and the media capability information of the first communications device comprise a same video calling frequency;
the matching and determining unit is further configured to, if the media capability information of the local communications device and the media capability information of the first communications device comprise a same audio calling frequency, and the media capability information of the local communications device and the media capability information of the first communications device comprise a same video calling frequency, determine that the media capability information of the local communications device matches the media capability information of the first communications device; and
the matching and determining unit is further configured to, if the media capability information of the local communications device and the media capability information of the first communications device comprise a same audio calling frequency, and the media capability information of the local communications device and the media capability information of the first communications device do not comprise a same video calling frequency, determine that the media capability information of the local communications device does not match the media capability information of the first communications device.

9. A communications device, wherein the communications device comprises: a receiver, a sender, and a processor, wherein the receiver is coupled with the processor, and the processor is coupled with the sender;
the receiver is configured to receive a video call request sent by a first communications device, wherein the video call request carries media capability information of the first communications device;
the processor is configured to determine whether media capability information of a local communications device matches the media capability information of the first communications device, wherein
the processor is further configured to construct a Session Description Protocol SDP answer message when the media capability information of the local communications device does not match the media capability information of the first communications device, and the media capability information of the local communications device and the media capability information of the first communications device comprise a same audio calling frequency, wherein content of a video support field of the SDP answer message is empty, and an audio support field of the SDP answer message is the same audio calling frequency; and
the sender is configured to send the SDP answer message to the first communications device, so that the first communications device and the local communications device transmit video data.

10. The communications device according to claim 9, wherein the processor is further specifically configured to construct the SDP answer message when the media capability information of the local communications device and the media capability information of the first communications device comprise a same audio calling frequency, and the media capability information of the local communications device and the media capability information of the first communications device do not comprise a same video calling frequency, wherein the audio support field of the SDP answer message is the same audio calling frequency, the video support field is reserved, and the content of the video support field is empty;
the processor is further specifically configured to construct the SDP answer message when the media capability information of the local communications device and the media capability information of the first communications device comprise a same audio calling frequency, and neither the media capability information of the local communications device nor the media capability information of the first communications device comprises a video calling frequency, wherein the audio support field of the SDP answer message is the same audio calling frequency, the video support field is reserved, and the content of the video support field is empty.

11. The communications device according to claim 9, wherein the processor is further configured to: determine whether the media capability information of the first communications device comprises a video calling frequency, wherein if the media capability information of the first communications device does not comprise a video calling frequency, the media capability information of the local communications device does not match the media capability information of the first communications device; and determine, if the media capability information of the first communications device comprises a video calling frequency, whether the media capability information of the local communications device comprises a video calling frequency, wherein if the media capability information of the local communications device does not comprise a video calling frequency, the media capability information of the local communications device does not match the media capability information of the first communications device.

12. The apparatus according to claim 11, wherein the processor is further configured to determine, if the media capability information of the local communications device comprises a video calling frequency, whether the media capability information of the local communications device and the media capability information of the first communications device comprise a same audio calling frequency, and whether the media capability information of the local communications device and the media capability information of the first communications device comprise a same video calling frequency, wherein if the media capability information of the local communications device and the media capability information of the first communications device comprise a same audio calling frequency, and the media capability information of the local communications device and the media capability information of the first communications device comprise a same video calling frequency, the media capability information of the local communications device matches the media capability information of the first communications device; and if the media capability information of the local communications device and the media capability information of the first communications device comprise a same audio calling frequency, and the media capability information of the local communications device and the media capability information of the first communications device do not comprise a same video calling frequency, the media capability information of the local communications device does not match the media capability information of the first communications device.
